# EUROPEAN PATENT APPLICATION

(11) **EP 2 413 410 A1**
(43) Date of publication of application: **01.02.2012**
(21) Application number: 10755594.8
(22) Date of filing: 09.03.2010
(51) Int. Cl.: H01M 8/04, H01M 8/10

(54) **FUEL CELL SYSTEM AND METHOD FOR OPERATING FUEL CELL SYSTEM**

(30) Priority: 25.03.2009 JP 2009074933; 08.03.2010 JP 2010050890
(71) Applicant: Panasonic Corporation, Kadoma-shi Osaka 571-8501 (JP)
(72) Inventor: KUSUMURA, Koichi, Chuo-ku, Osaka-shi, Osaka 540-6207 (JP); YASUDA, Shigeki, Chuo-ku, Osaka-shi, Osaka 540-6207 (JP); NAKAMURA, Akinari, Chuo-ku, Osaka-shi, Osaka 540-6207 (JP)
(74) Representative: Schwabe - Sandmair - Marx
(86) International application number: PCT/JP2010/001638
(87) International publication number: WO 2010/109790

(57) **Abstract**

A fuel cell system (100) includes: a first circulation passage (2) through which circulates a primary cooling medium to recovery the exhaust heat of the fuel cell system (100); a heat storage unit (5) configured to store a secondary cooling medium which has recovered heat from the primary cooling medium; a heat exchanger (4) where heat exchange takes place between the primary cooling medium and the secondary cooling medium; a second circulation passage (30A), not passing through the heat storage unit (5), through which circulates the secondary cooling medium to exchange heat with the primary cooling medium; a first circulator (6) configured to cause the primary cooling medium to circulate through the first circulation passage (2); a second circulator (8) configured to cause the secondary cooling medium to circulate through the second circulation passage (30A); a heater (200) configured to heat the secondary cooling medium; and a controller (40) configured to perform, for inhibiting freezing of the primary cooling medium, a first process so that the heater (200) is operated and the first and the second circulators (6) and (8) are operated.

## Description

### Technical Field

This invention relates to a fuel cell system and a method for operating the same.

### Background Art

There is a fuel cell system in combination with a polymer electrolyte fuel cell which uses a solid polymer membrane as an electrolyte (such a fuel cell is hereinafter referred to shortly as "fuel cell"). This type of fuel cell produces electric power by the electrochemical reaction, i.e., the exothermic reaction between hydrogen in the fuel gas mainly comprised of hydrogen gas and oxygen in the air. In addition, the fuel gas can be obtained by steam reforming of hydrocarbon gas such as a city gas.

In addition, during the generation of electric power in the fuel cell, the above electrochemical reaction (exothermic reaction) will progress, and therefore there is generally employed a mechanism for maintaining a constant internal temperature of the fuel cell so that the operating temperature of the fuel cell during the generation of electric power is maintained at suitable temperatures for the reaction (for example, from about 70° C to about 80° C).

For example, there is arranged in a fuel cell a cooling water passage through which cooling water as a primary cooling medium flows, and the fuel cell internal temperature is regulated by controlling, for example, the flow rate of the cooling water flowing through the passage. On the other hand, after the heat of the high-temperature cooling water which has passed through the fuel cell is recovered, by heat exchange, into a secondary cooling medium, and if such a secondary cooling medium is stored in a heat storage unit, this makes it possible to store heat in the fuel cell system.

Incidentally, there is a case where cooling water freezes when the outside air temperature reduces, thereby causing damage to cooling water circulation passages. This disturbs the operation of the fuel cell system. Therefore, there has been proposed a fuel cell system in which cooling water is kept hot by hot water (an example of the secondary cooling medium), stored in a hot water storage tank (an example of the heat storage unit) whereby the cooling water is inhibited from freezing (see, for example, Patent Literature 1).

### Citation List

### Patent Literature

Patent Literature 1; JP-A-2003-282105

### Summary of Invention

### Technical Problem

However, in the fuel cell system of Patent Literature 1, the water used to inhibit freezing of the cooling water is heated by an auxiliary heat source in the hot water storage tank (see paragraph [0037] of Patent Literature 1 and Figure 1 thereof). In the fuel cell system as a conventional example, when inhibiting freezing of the cooling water serving as a primary cooling medium of the fuel cell, heat is also taken to heat the entire hot water storage tank as a heat storage unit, and therefore the efficiency of transferring the heat of the auxiliary heat source to the cooling water is poor. In addition, the same problem as above may be assumed to occur, not only when inhibiting freezing of the cooling water of the fuel cell, but also when inhibiting freezing of the other primary cooling medium used for recovery of the exhaust heat produced in the fuel cell system.

The present invention was made in view of these circumstances, and an object of the invention is to provide a fuel cell system capable of achieving further improvement, as compared to conventional ones, in efficiency of transferring the heat of a heater configured to heat the secondary cooling medium such as stored hot water to the primary cooling medium in the operation of inhibiting freezing of the primary cooling medium used for recovery of the exhaust heat produced in the fuel cell system. In addition, another object of the invention is to provide a method for operating such a fuel cell system.

### Solution to Problem

To solve the above problem, a fuel cell system according to the invention comprises: a fuel cell; a first circulation passage through which circulates a primary cooling medium to recover exhaust heat produced in the fuel cell system including the fuel cell; a heat storage unit configured to store a secondary cooling medium which has recovered heat from the primary cooling medium; a heat exchanger where heat exchange takes place between the primary cooling medium and the secondary cooling medium; a second circulation passage, not passing through the heat storage unit, through which circulates the secondary cooling medium to exchange heat with the primary cooling medium in the heat exchanger; a first circulator configured to cause the primary cooling medium to circulate through the first circulation passage; a second circulator configured to cause the secondary cooling medium to circulate through the second circulation passage; a heater configured to heat the secondary cooling medium in the second circulation passage; and a controller configured to perform, for inhibiting freezing of the primary cooling medium, a first process so that the heater is operated and the first and the second circulators are operated.

In addition, the fuel cell system of the invention further includes: a third circulation passage, passing through the heat storage unit, through which circulates the secondary cooling medium to exchange heat with the primary cooling medium in the heat exchanger; and a bypass passage configured to provide connection between the third circulation passage upstream of the heat exchanger and the third circulation passage downstream of the heat exchanger, wherein the second circulation passage is comprised of the third circulation passage which extends from one point of the connection, located upstream of the heat exchanger, with the bypass passage, passes through the heat exchanger and reaches to the other point of the connection, located downstream of the heat exchanger, with the bypass passage, and the bypass passage. In addition, the fuel cell system of the invention further includes a switch configured to switch the destination, into which the secondary cooling medium after passage through the heat exchanger is directed to flow, between the heat storage unit and the bypass passage, wherein the controller is configured to control the switch so that in the first process, the inflow destination is selectively directed towards the bypass passage. Additionally, according to the fuel cell system of the invention, prior to the first process, the controller is configured to perform a second process so that with the heater placed out of operation, the first circulator is operated.

In addition, in the fuel cell system of the invention, the controller is configured to control so that the amount of heat application of the heater increases and decreases at intervals during the first process.

In a method for operating a fuel cell system according to the invention, the fuel cell system comprising: a fuel cell; a first circulation passage through which circulates a primary cooling medium to recover exhaust heat produced in the fuel cell system including the fuel cell; a heat storage unit configured to store a secondary cooling medium which has recovered heat from the primary cooling medium; a heat exchanger where heat exchange takes place between the primary cooling medium and the secondary cooling medium; a second circulation passage, not passing through the heat storage unit, through which circulates the secondary cooling medium to exchange heat with the primary cooling medium in the heat exchanger; a first circulator configured to cause the primary cooling medium to circulate through the first circulation passage; a second circulator configured to cause the secondary cooling medium to circulate through the second circulation passage; and a heater configured to heat the secondary cooling medium in the second circulation passage. For inhibiting freezing of the primary cooling medium, the method comprises the steps of: (a) the step in which the heater is operated and the secondary cooling medium is circulated through the second circulation passage; and (b) the step in which the heat held in the secondary cooling medium heated in the step (a) is transferred via the heat exchanger to the primary cooling medium circulating through the first circulation passage,

### Advantageous Effects of Invention

As described above, in the fuel cell system according to the invention, it is configured such that the secondary cooling medium heated by the heater is circulated without passing through the heat storage unit and the transfer of heat is made via the heat exchanger to the primary cooling medium. Therefore, according to the invention, in the operation of inhibiting the primary cooling medium from freezing, the efficiency at which the heat of the heater is transferred to the primary cooling medium is further improved as compared to conventional fuel cell systems.

### Brief Description of Drawings

[Fig. 1] Figure 1 is a block diagram showing one example of the arrangement of a fuel cell system according to Embodiment 1 of the invention.
[Fig. 2] Figure 2 is a flowchart showing one example of the operation of inhibiting the cooling water from freezing in the fuel cell system according to Embodiment 1 of the invention.
[Fig. 3] Figure 3 is a flowchart showing one example of the operation of inhibiting the cooling water from freezing in a fuel cell system according to a modified example of Embodiment 1 of the invention.
[Fig. 4] Figure 4 is a block diagram showing one example of the arrangement of a fuel cell system according to Embodiment 2 of the invention.
[Fig. 5] Figure 5 is a block diagram showing one example of the arrangement of a fuel cell system according to a modified example of Embodiment 2 of the invention.

### Description of Embodiments

First, various characteristic features of the embodiments of the invention will be given below.

A fuel cell system according to a first aspect comprises: a fuel cell; a first circulation passage through which circulates a primary cooling medium to recover exhaust heat produced in the fuel cell system including the fuel cell; a heat storage unit configured to store a secondary cooling medium which has recovered heat from the primary cooling medium; a heat exchanger where heat exchange takes place between the primary cooling medium and the secondary cooling medium; a second circulation passage, not passing through the heat storage unit, through which circulates the secondary cooling medium to exchange heat with the primary cooling medium in the heat exchanger; a first circulator configured to cause the primary cooling medium to circulate through the first circulation passage; a second circulator configured to cause the secondary cooling medium to circulate through the second circulation passage; a heater configured to heat the secondary cooling medium in the second circulation passage; and a controller configured to perform, for inhibiting freezing of the primary cooling medium, a first process so that the heater is operated and the first and the second circulators are operated.

By such a configuration, the secondary cooling medium heated by the heater circulates without passing through the heat storage unit, and the transfer of heat is made via the heat exchanger to the primary cooling medium.

Therefore, in the operation of inhibiting freezing of the primary cooling medium used for recovery of the exhaust heat produced in the fuel cell system, the efficiency at which the heat of the heater configured to heat the secondary cooling medium such as stored hot water is transferred to the primary cooling medium is further improved as compared to conventional fuel cell systems.

As the "primary cooling medium", for example, cooling water, oil or the like may be used. However, not only such cooling medium but also cooling medium of whatever type capable of recovery of the exhaust heat produced in the fuel cell system and at risk of freezing may be used.

As the "secondary cooling medium", various media, for example, such as liquid water, antifreeze liquid and so on may be used. In the case where water is used as the "secondary cooling medium", the "heat storage unit" may be configured in the form of a hot water storage tank for holding hot water stored.

The "heat exchanger" refers to a device intended to exchange heat between the heat held in a high-temperature heat applying fluid and the heat held in a low-temperature heat receiving fluid, and in the operation of inhibiting freezing of the primary cooling medium of the fuel cell system, the secondary cooling medium corresponds to a heat applying fluid and the primary cooling medium corresponds to a heat receiving fluid in the heat exchanger where heat exchange takes place between the primary cooling medium and the secondary cooling medium.

The "heater" may be in any form of heat supply mechanism as long as it serves as a device capable of indirect or direct application of heat to the secondary cooling medium in the second circulation passage. And, a combustor (such as a combustion burner) capable of generating a high-temperature combustion exhaust gas produced as a result of fuel combustion and a heat pump using atmospheric heat may be given as one example of the "heater".

The "controller" is formed by a microcomputer or the like which incorporates therein a CPU and a memory. The "controller" may be provided singularly or in plurality.

A fuel cell system according to a second aspect, which is based on the fuel cell system according to the first aspect, may include: a third circulation passage, passing through the heat storage unit, through which circulates the secondary cooling medium to exchange heat with the primary cooling medium in the heat exchanger; and a bypass passage configured to provide connection between the third circulation passage upstream of the heat exchanger and the third circulation passage downstream of the heat exchanger. And it may be arranged in such a way that the second circulation passage is comprised of the third circulation passage which extends from one point of the connection, located upstream of the heat exchanger, with the bypass passage, passes through the heat exchanger and reaches to the other point of the connection, located downstream of the heat exchanger, with the bypass passage, and the bypass passage.

By such a configuration, the second circulation passage not passing through the heat storage unit is shared with a part of the third circulation passage passing through the heat exchanger, and these two passages are partially made common. This makes it possible to construct a circulation system for the secondary cooling medium with ease.

A fuel cell system according to a third aspect, which is based on the fuel cell system according to the second aspect, may include a switch configured to switch the destination, into which the secondary cooling medium after passage through the heat exchanger is directed to flow, between the heat storage unit and the bypass passage. And it may be arranged such that the controller is configured to control the switch so that in the first process, the inflow destination is selectively directed towards the bypass passage.

By such a configuration, in the operation of inhibiting freezing of the primary cooling medium of the fuel cell system it becomes possible that the secondary cooling medium which exchanges heat with the primary cooling medium flows through the bypass passage of the second circulation passage without passing through the heat storage unit. Therefore, in the operation of inhibiting the primary cooling medium from freezing, the efficiency at which the heat of the heater is transferred to the primary cooling medium is further improved as compared to conventional fuel cell systems.

In addition, at the time when performing the operation of inhibiting freezing of the primary cooling medium, the destination into which the secondary cooling medium is directed to flow is selectively directed towards the bypass passage, whereby the flowing of the secondary cooling medium of low temperature into the heat storage unit is inhibited and consequently the fall in temperature of the secondary cooling medium stored in the heat storage unit is inhibited.

The "switch" refers to a component disposed somewhere along the fluid passage and configured to change the course of flow of the fluid and may be implemented by, for example, a three-way valve used for fluid passage switching.

A fuel cell system according to a fourth aspect, which is based on the fuel cell system according to the first aspect, wherein prior to the first process, the controller is configured to perform a second process so that with the heater placed out of operation, the first circulator is operated.

By such a configuration, it becomes possible to carry out the operation of inhibiting freezing of the primary cooling medium at lower consumption energy than the first process. In addition, one of the following two configurations may be employed in the second process, i.e., a mode in which the second circulator is operated so that the secondary cooling medium is circulated through the second circulation passage and another mode in which the second circulator is stopped so that the secondary cooling medium is not circulated through the second circulation passage.

A fuel cell system according to a fifth aspect, which is based on the fuel cell system according to the first aspect, wherein the controller is configured to control the heater so that the amount of heat application of the heater is increased and decreased at intervals during the first process.

By such a configuration, the amount of heat application of the heater can be increased and decreased at intervals according to need, thereby making it possible to carry out the operation of inhibiting freezing of the primary cooling medium while inhibiting excessive rise in temperature of the secondary cooling medium to be heated by the heater.

The wording "increased and decreased at intervals" is not limited to the case where the increase and decrease is repeated at constant intervals of time and may apply to, for example, the case where the increase and decrease is repeated based on the temperature of the secondary cooling medium. More specifically, The wording "increased and decreased at intervals" includes such a control operation that for inhibiting excessive rise in temperature of the secondary cooling medium due to the heating operation of the heater, the amount of heat application by the heater is decreased with the rise in temperature of the secondary cooling medium while for inhibiting freezing of the primary cooling medium, the amount of heat application by the heater is increased with the fall in temperature of the secondary cooling medium.

In a method for operating a fuel cell system of the first aspect, the fuel cell system comprises: a fuel cell; a first circulation passage through which circulates a primary cooling medium to recover exhaust heat produced in the fuel cell system including the fuel cell; a heat storage unit configured to store a secondary cooling medium which has recovered heat from the primary cooling medium; a heat exchanger where heat exchange takes place between the primary cooling medium and the secondary cooling medium; a second circulation passage, not passing through the heat storage unit, through which circulates the secondary cooling medium to exchange heat with the primary cooling medium in the heat exchanger; a first circulator configured to cause the primary cooling medium to circulate through the first circulation passage; a second circulator configured to cause the secondary cooling medium to circulate through the second circulation passage; and a heater configured to heat the secondary cooling medium in the second circulation passage. For inhibiting freezing of the primary cooling medium, the method comprises the steps of: (a) the step in which the heater is operated and the secondary cooling medium is circulated through the second circulation passage; and (b) the step in which the heat held in the secondary cooling medium heated in the step (a) is transferred via the heat exchanger to the primary cooling medium circulating through the first circulation passage.

### Embodiment 1

In the following, a fuel cell system of Embodiment 1 of the invention will now be described regarding its concrete configuration and operating examples, with reference to the drawings.

However, it should be noted that the following concrete descriptions are just exemplifications showing features of each of the above fuel cell systems (the same with respect to Embodiment 2 to be hereinafter described). For example, when describing the following concrete examples by assignment of appropriate referential signs to the same terms as those specifying each of the foregoing fuel cell systems, the concerned concrete device is a corresponding example of the constructional element of each of the foregoing fuel cell systems.

Therefore, the features of each of the above fuel cell systems are not limited by the following concrete descriptions.

### [Configuration Examples of Fuel Cell System]

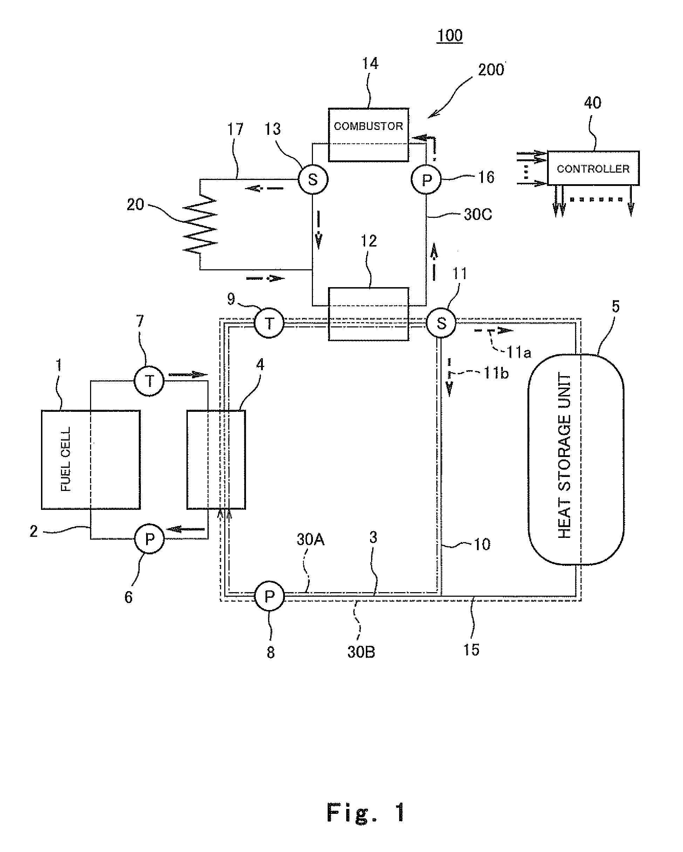

Figure 1 is a block diagram showing an example of the arrangement of a fuel cell system according to Embodiment 1 of the invention.

As shown in Figure 1, a fuel cell system 100 includes a fuel cell 1 which generates electric power and heat by use of fuel gas (hydrogen gas).

In the fuel cell 1, fuel gas supplied to an anode (not shown) of the fuel cell 1 and oxidant gas (for example, air) supplied to a cathode (not shown) of the fuel cell 1 react electrochemically to generate electric power and heat (exothermic reaction). The electricity generated by the fuel cell 1 can be utilized, for example, for various electric equipment. On the other hand, the heat generated by the fuel cell 1 can be utilized for various applications, for example, home heating, hot water supply and so on (the details thereof will be described later).

In addition, the internal structure of fuel cells is publicly known. Therefore, its detailed description is omitted here.

Incidentally, it is common practice in fuel cell systems to recover exhaust heat produced during their electric power generating operation. As a primary cooling medium for recovery of the exhaust heat, for example, cooling water for cooling the fuel cell can be used. It is arranged in such a way that the cooling water circulates through a circulation passage which passes through the fuel cell. Now, therefore, a description will be given regarding an example of the configuration of the fuel cell system 100 in which the fuel cell is cooled by cooling water in the circulation passage.
As shown in Figure 1, the fuel cell system 100 includes a first circulation passage 2 through which the cooling water circulates to recover exhaust heat produced in the fuel cell system 100 including the fuel cell 1, a first circulator 6 configured to circulate the cooling water through the first circulation passage 2 and a first temperature detector 7 configured to detect the temperature of the cooling water flowing through the first circulation passage 2. In Figure 1, the direction in which the cooling water flows is shown by thick solid line arrows. In addition, the first temperature detector 7 is disposed, between the fuel cell 1 and a first heat exchanger 4, in the first circulation passage 2, which arrangement is, however, just an example. Therefore, the first temperature detector 7 may be disposed in any positions of the first circulation passage 2.

The first circulator 6 is a device by which the cooling water is circulated through the first circulation passage 2. For example, a pump can be used as the first circulator 6. However, any device can be used as the first circulator 6 as long as it is capable of circulation of the cooling water through the first circulation passage 2. As the first temperature detector 7, for example, a thermistor or a thermo couple may be used. However, the first temperature detector 7 may be other type of temperature detector.

Thus, the flow rate of and the temperature of the cooling water flowing through the first circulation passage 2 are controlled by a controller 40 (to be hereinafter described), whereby the temperature of the fuel cell 1 is regulated.

In addition, during the electric power generating operation in the fuel cell system 100 of the present embodiment, the heat of the cooling water in a high temperature state after passage through the fuel cell 1 is recovered by a secondary cooling medium (for example, stored hot water) through heat exchange in the first heat exchanger 4, and then the secondary cooling medium in such a state is stored in a heat storage unit 5 (for example, a hot water storage tank).

Therefore, as shown in Figure 1, the fuel cell system 100 includes the first heat exchanger 4 where heat exchange takes place between the cooling water (primary cooling medium) after passage through the fuel cell 1 and the secondary cooling medium, the heat storage unit 5 configured to store the secondary cooling medium which has recovered heat from the cooling water, a secondary cooling medium circulation passage through which the secondary cooling medium which exchanges heat with the cooling water is circulated, a second circulator 8 which causes the secondary cooling medium to circulate through the secondary cooling medium circulation passage and a second temperature detector 9 configured to detect the temperature of the secondary cooling medium flowing out from the first heat exchanger 4. In Figure 1, the direction in which the secondary cooling medium flows is shown by thick dotted line arrows.

Incidentally, in the fuel cell system 100 of the present embodiment, there exist, as shown in Figure 1, two different passages as examples of the above secondary cooling medium circulation passage, namely a second circulation passage 30A (indicated by thin chain line in Figure 1) formed by a common passage 3 and a bypass passage 10 and a third circulation passage 30B (indicated by thin dotted line in Figure 1) formed by the common passage 3, a heat storage side passage 15 and the heat storage unit 5.

As shown in Figure 1, the heat storage side passage 15 of the third circulation passage 30B is provided thereon with the heat storage unit 5 and is formed so as to pass through the heat storage unit 5, whereby the third circulation passage 30B is formed to pass through the heat storage unit 5, thereby allowing the secondary cooling medium which exchanges heat with the cooling water to circulate therethrough.

In addition, by the bypass passage 10 of the second circulation passage 30A, the third circulation passage 30B upstream of the heat storage unit 5 and the third circulation passage 30B downstream of the heat storage unit 5 are connected together in such a way that the heat storage unit 5 is bypassed, whereby the second circulation passage 30A is formed not to pass through the heat storage unit 5, thereby allowing the secondary cooling medium which exchanges heat with the cooling water to circulate therethrough.

In addition, there is provided a switch 11 configured to switch the destination, into which the secondary cooling medium after passage through the first heat exchanger 4 is directed to flow, between the heat storage unit 5 and the bypass passage 10. Here, if the first switch 11 is selectively directed toward the heat storage unit 5, this causes the secondary cooling medium to flow, via the heat storage unit 5, through the heat storage side passage 15 of the third circulation passage 30B, as indicated by an arrow 11a of Figure 1. If the first switch 11 is selectively directed towards the bypass passage 10, this causes the secondary cooling medium to flow, without passing through the heat storage unit 5, through the bypass passage 10 of the second circulation passage 30A, as indicated by an arrow 11b of Figure 1. In addition, the first switch 11 may be in such a form that a three-way valve is arranged where the third circulation passage 30B and the bypass passage 10 are connected together, and alternatively the first switch 11 may be in such a form that the bypass passage 10 and the heat storage side passage 15 upstream of the heat storage unit 5 are each provided with a respective on-off valve. That is, any device can be used as the first switch 11 as long as it is a device capable of switching the destination, into which the secondary cooling medium after passage through the first heat exchanger 4 is directed to flow, between the heat storage unit 5 and the bypass passage 10.

In addition, in the fuel cell system 100 of the present embodiment, the switching of the first switch 11 is made based on the temperature of the secondary cooling medium detected by the second temperature detector 9. More specifically, the first switch 11 is automatically selectively directed towards the heat storage unit 5 if the temperature of the secondary cooling medium detected is higher than a predetermined temperature (for example, 60° C). This makes it possible that the secondary cooling medium after heat recovery from the cooling water is stored in the heat storage unit 5, On the other hand, the first switch 11 is automatically selectively directed towards the bypass passage 10 if the temperature of the secondary cooling medium detected is equal to or less than a predetermined temperature (for example, 60° C). This inhibits the flowing of the secondary cooling medium of low temperature into the heat storage unit 5 and consequently inhibits the fall in temperature of the secondary cooling medium stored in the heat storage unit 5.

As described above, in the fuel cell system 100 of the present embodiment, the second circulation passage 30A not passing through the heat storage unit 5 is comprised of a portion of the third circulation passage 30B (the common passage 3) which portion extends from one point of the connection, located upstream of the first heat exchanger 4, with the bypass passage 10, then passes through the first heat exchanger 4 and finally reaches to the other point of the connection, located downstream of the first heat exchanger 4, with the bypass passage 10, and the bypass passage 10. This makes these second and third circulation passages 30A and 30B partially common, thereby making it possible to easily construct a circulation system for the secondary cooling medium.

When using, for example, water as the secondary cooling medium in the second and third circulation passages 30A and 30B, the heat storage unit 5 can be configured in the form of a hot water storage tank for storing, for example, hot water. In this case, the stored hot water may be utilized for hot water supply in the home. Therefore, according to the fuel cell system 100 of the present embodiment, it becomes possible to construct a cogeneration system for utilization of both electric power and heat.

The second circulator 8 is a device for circulation of the cooling water. For example, a pump can be used as the second circulator 8. However, any device can be used as the second circulator 8 as long as it is capable of circulation of the cooling water through the second circulation passage 30A. As the second temperature detector 9, for example, a thermistor or a thermo couple can be used. However, the second temperature detector 9 may be other type of temperature detector.

In addition, as shown in Figure 1, the fuel cell system 100 of the present embodiment includes a heater 200 configured to heat the secondary cooling medium in the second circulation passage 30A whereby the heater 200 performs an operation of inhibiting the cooling water from freezing, which operation will be described later. In the present embodiment, the heater 200 is disposed in the common passage downstream of the first heat exchanger 4. However, the heater 200 may be disposed anywhere as long as it is disposed along the second circulation passage 30A.

The heater 200 can be configured by any heat supply mechanism capable of applying heat to the secondary cooling medium in the second circulation passage 30A. Figure 1 shows, as an example of such a heat supply mechanism, a case in which a combustor (combustion burner) 14 for supplying heat to a home heat load 20 (heat consumption terminal, for example, a floor heating panel) is used also as a heat source for the secondary cooling medium in the common passage 3 of the second circulation passage 30A.

Therefore, as shown in Figure 1, the fuel cell system 100 of the present embodiment includes a fourth circulation passage 30C through which the heat medium for use in the heat load 20 is circulated, a third circulator 16 configured to cause the heat medium to circulate through the fourth circulation passage 30C, the combustor 14 capable of heating the heat medium in the fourth circulation passage 30C and a second heat exchanger 12 where heat exchange takes place between the heat medium in the fourth circulation passage 30C and the secondary cooling medium in the common passage 3. The direction in which the heat medium flows is indicated by bold chain line in Figure 1.

The fuel cell system 100 of the present embodiment further includes a heat load passage 17 configured to feed the heat medium to the heat load 20 and a second switch 13 (for example, a three-way valve) capable of switching the destination, into which the heat medium after passage through the combustor 14 is directed to flow, between the heat load 20 and the second heat exchanger 12.

In the operation of inhibiting freezing of the cooling water by means of the heater 200, the second switch 13 is selectively directed towards the second heat exchanger 12. And in the second heat exchanger 12, the heat medium in the fourth circulation passage 30C corresponds to a heat applying fluid and the secondary cooling medium in the common passage 3 of the second circulation passage 30A corresponds to a heat receiving fluid.

The third circulator 16 is a device for circulation of the heat medium. For example, a pump can be used as the third circulator 16. However, any device can be used as the third circulator 16 as long as it is capable of circulation of the heat medium in the fourth circulation passage 30C. In addition, as the heat medium in the fourth circulation passage 30C, for example, water, antifreeze liquid or the like can be used.

In addition, the fuel cell system 100 includes a controller 40, as shown in Figure 1.

Based on signals from various detectors of the fuel cell system 100, the controller 40 including a CPU and a memory controls the operation of various controlled target devices.

In the fuel cell system 100 of the present embodiment, the controller 40 controls, based on the temperature detected by the first temperature detector 7, at least the heating operation of the heater 200 and the operation of the first and second circulators 6 and 8 to thereby perform an anti-freezing operation as follows for inhibiting freezing of the cooling water.

### [Operating Example of Operation of Inhibiting Freezing of Cooling Water in Fuel Cell System]

Hereinafter, a description will be given regarding an operating example of the operation of inhibiting freezing of the cooling water by the fuel cell system 100 of Embodiment 1 of the invention.

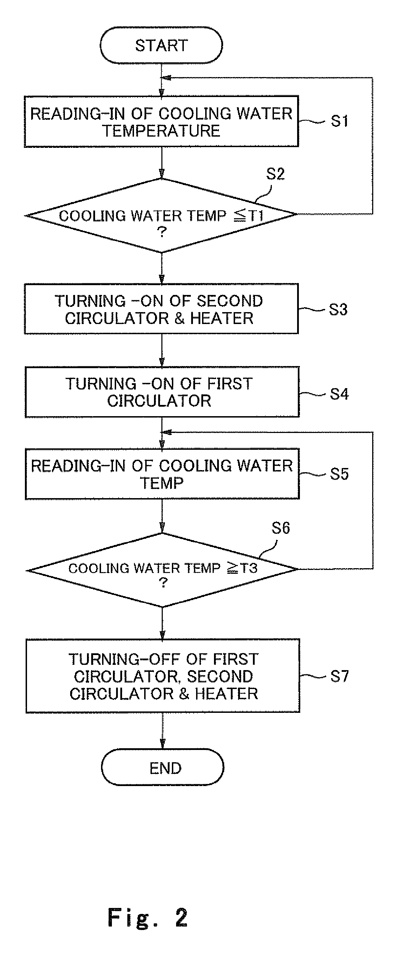

Figure 2 is a flowchart showing an example of the operation of inhibiting freezing of the cooling water by the fuel cell system of Embodiment 1 according to the invention.

Each operating flow shown in Figure 2 is pre-programmed and stored, together with preset set temperatures T1 and T3, in the memory of the controller 40.

Here, the set temperatures T1 and T3 are reference temperatures (threshold temperatures) for the cooling water in the first circulation passage 2 for use in inhibition of freezing of the cooling water, and the relationship in level between these set temperatures T1 and T3 is: T1 < T3.

Based on the instruction from the CPU of the controller 40, the program and the set temperatures T1 and T3 are read out to the CPU of the controller 40 at the time when the electric power generating operation of the fuel cell system 100 is being stopped, and the program thus read out executes the following operations while controlling each part of the fuel cell system 100,

In the fuel cell system 100, when the electric power generating operation of the fuel cell system 100 is stopped, the operation of inhibiting freezing of the cooling water always remains in an operation standby state. For example, it may be arranged in such way that upon completion (END) of the operation of step S7, the operation of step S1 automatically restarts (START).

In addition, as described above, the first switching valve 11 automatically switches based on the temperature of the secondary cooling medium detected by the second temperature detector 9. Therefore, diagrammatical representation of the operating flowchart as to the timing of switching of the first switching valve 11 is omitted here.

During shutdown of the fuel cell system 100, the following control of inhibiting freezing of the cooling water starts at a suitable timing.

First, the temperature of the cooling water detected by the first temperature detector 7 is read in (step S1), and then it is decided whether or not the cooling water temperature detected is equal to or less than the set temperature T1 (step S2).

The set temperature T1 is set at higher temperatures than the freeze point of the cooling water (0° C).

If the cooling water temperature exceeds the set temperature T1 (that is, if the decision result of step S2 is "NO"), then the procedure flow returns to step S1 because there is no possibility of freezing of the cooling water, and the operations subsequent to step S1 are repeated. On the other hand, if the cooling water temperature is equal to or less than the set temperature T1 (that is, if the decision result of step S2 is "YES"), then the second circulator 8 and the heater 200 are operated (turned on) because there is the possibility of freezing of the cooling water (step S3). Besides, the first circulator 6 is operated (turned on) to start an anti-freezing operation (step S4).

In the way as described above, the heater 200, the first circulator 6 and the second circulator 8 are all operated (turned on). That is, in the present embodiment, there is carried out an operation of inhibiting freezing of the cooling water which operation comprises a step in which for inhibiting freezing of the cooling water, the heater 200 is operated and the secondary cooling medium is circulated through the second circulation passage 30A and a step in which the heat held in the secondary cooling medium heated in the preceding step is transferred via the first heat exchanger 4 to the cooling water circulating through the first circulation passage 2 (the first process). In addition, in the present embodiment the first switch 11 is switched such that the destination into which the secondary cooling medium flows is directed towards the bypass passage 10. Thus, the heat from the heater 200 is supplied to the secondary cooling medium in the second circulation passage 30A (the common passage 3) not passing through the heat storage unit 5, whereby the heat of the secondary cooling medium is promptly supplied via the first heat exchanger 4 to the cooling water in the first circulation passage 2. Therefore, it becomes possible to efficiently inhibit freezing of the cooling water.
Next, the temperature of the cooling water detected by the first temperature detector 7 is read in (step S5), and then it is decided whether or not the cooling water temperature detected is equal to or greater than the set temperature T3 (step S6).

The set temperature T3 serves as a reference temperature for bringing the anti-freezing operation to a stop and is set at higher temperatures than the set temperature T1. The reason for this is to have such hysteresis that the anti-freezing operation will not be frequently turned on and off.

If the cooling water temperature is less than the set temperature T3 (that is, if the decision result of step S6 is "NO"), then the procedure flow returns to step S5, and the operations subsequent to step S5 will be repeated. On the other hand, if the cooling water temperature is equal to or greater than the set temperature T3 (that is, if the decision result of step S6 is "YES"), then the first circulator 6, the second circulator 8 and the heater 200 are stopped (turned off) because there exists no longer any possibility of freezing of the cooling water (step S7). This brings the cooling water anti-freezing operation to an end (END).

The above makes it possible that in the cooling water anti-freezing operation of the fuel cell system 100A of the present embodiment, the secondary cooling medium, which exchanges heat with the cooling water in the first heat exchanger 4, passes through the bypass passage 10 of the second circulation passage 30A without passing through the heat storage unit 5. Therefore, in the cooling water anti-freezing operation with the aid of the heat of the heater 200, the efficiency at which the heat of the heater 200 is transferred to the cooling water is further improved as compared to conventional fuel cell systems.

In addition, at the time when performing the cooling water anti-freezing operation, the destination into which the secondary cooling medium flows is selectively directed towards the bypass passage 10, whereby the flowing of the secondary cooling medium at low temperature into the heat storage unit 5 is inhibited and consequently the fall in temperature of the secondary cooling medium stored in the heat storage unit 5 is inhibited.

### Modified Example of Embodiment

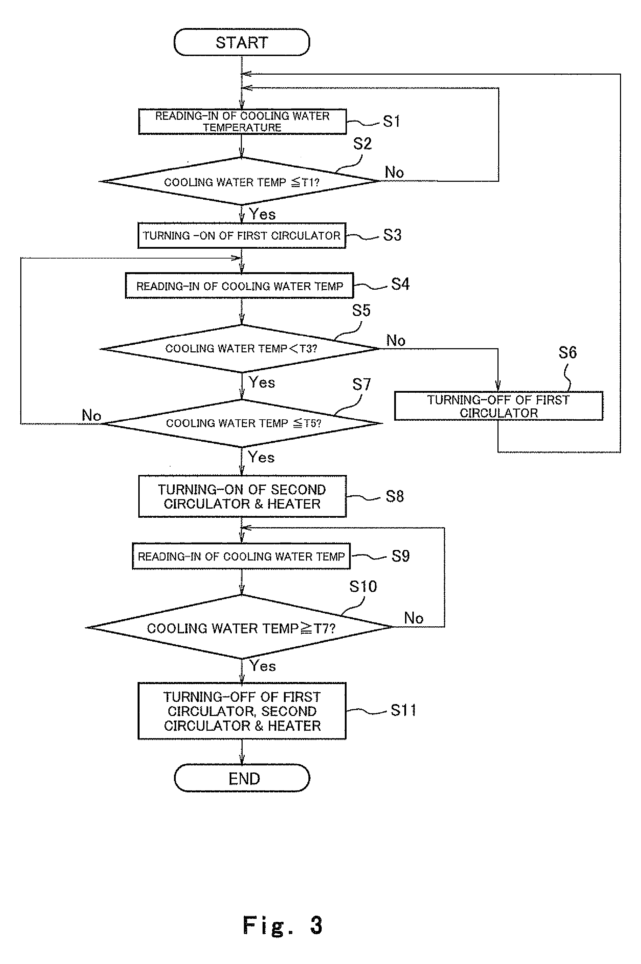

Figure 3 is a flowchart showing an example of the cooling water anti-freezing operation by a fuel cell system according to a modified example of Embodiment 1 of the invention.

The configuration of the fuel cell system of the present modified example is the same as that of the fuel cell system 100 of Embodiment 1. Therefore, the same reference numerals assigned to each constituent element of the fuel cell system 100 of Embodiment 1 are used also in describing the corresponding constituent elements of the fuel cell system of the present modified example, and with respect to the configuration of the fuel cell system of the present modified example, its diagrammatical representation and detailed description are omitted.

Each operating flow shown in Figure 3 is pre-programmed and stored, together with preset set temperatures T1, T3, T5 and T7, in the memory of the controller 40.

Here, the set temperatures T1, T3, T5 and T7 are reference temperatures (threshold temperatures) for the cooling water in the first circulation passage 2 for use in inhibiting freezing of the cooling water, and the relationship in level among these set temperatures T1, T3, T5 and T7 is: T5 (lowest) < T1 < T3 < T7 (highest).

Based on the instruction from the CPU of the controller 40, the program and the set temperatures T1, T3, T5 and T7 are read out to the CPU of the controller 40 at the time when the electric power generating operation of the fuel cell system 100 is being stopped, and the program thus read out performs the following operations while controlling each part of the fuel cell system 100.

In the fuel cell system 100, when the electric power generating operation of the fuel cell system 100 is stopped, the cooling water anti-freezing operation always remains in an operation standby state. For example, it may be arranged in such way that upon completion (END) of the operation of step S11, the operation of step S1 automatically restarts (START).

In addition, as described above, the first switching valve 11 automatically switches based on the temperature of the secondary cooling medium detected by the second temperature detector 9. Therefore, diagrammatical representation of the operating flowchart as to the timing of switching of the first switching valve 11 is omitted here.

During shutdown of the fuel cell system 100, the cooling water anti-freezing control starts at a suitable timing (START). And, the cooling water anti-freezing operation is carried out based on the observation of the cooling water temperature.

First, prior to the cooling water anti-freezing operation (the first process) by the heater 200, the cooling water anti-freezing operation (the second process) by fluid circulation is executed.

Firstly, the second process will be described regarding its concrete operation.

The temperature of the cooling water detected by the first temperature detector 7 is read in (step S1), and then it is decided whether or not the cooling water temperature detected is equal to or less than the set temperature T1 (step S2).

The set temperature T1 is set at higher temperatures than the freeze point of the cooling water (0° C).

If the cooling water temperature detected exceeds the set temperature T1 (that is, if the decision result of step S2 is "NO"), then the procedure flow returns to step S1 because there is no possibility of freezing of the cooling water, and the operations subsequent to step S1 are repeated. On the other hand, if the cooling water temperature is equal to or less than the set temperature T1 (that is, if the decision result of step S2 is "YES"), then the first circulator 6 is operated (turned on) because there is the possibility of freezing of the cooling water (step S3). This starts the cooling water to circulate.

Next, the temperature of the cooling water detected by the first temperature detector 7 is again read in (step S4), and then it is decided whether or not the cooling water temperature detected is less than the set temperature T3 (step S5).

The set temperature T3 serves as a reference temperature for bringing the second process to a stop and is set at higher temperatures than the set temperature T1. The reason for this is to have such hysteresis that the anti-freezing operation will not be frequently turned on and off.

If the cooling water temperature is equal to or greater than the set temperature T3 (that is, if the decision result of step S5 is "NO"), then the first circulator 6 is stopped (turned off) because there exists no longer any possibility of freezing of the cooling water (step S6). This stops circulation of the cooling water. And, the procedure flow returns to step S1, and the operations subsequent to step S1 are repeated. On the other hand, if the cooling water temperature is less than the set temperature T3 (that is, the decision result of step S5 is "YES"), then the procedure flow proceeds to the decision operation of the subsequent step S7.

At step S7, it is decided whether or not the cooling water temperature read in at step S4 is equal to or less than the set temperature T5.

The set temperature T5 is lower than the set temperature T1 and is equal to or greater than the freeze point of the cooling water (0° C). The set temperature T5 may be set at a slightly higher temperature than the freeze point of the cooling water (for example, 1° C).

If the cooling water temperature exceeds the set temperature T5 (that is, if the decision result of step S7 is "NO"), then the procedure flow returns to step S4, and the operations subsequent to step S4 will be repeated.

The above is a summary of the operating flow of the second process for inhibiting freezing of the cooling water. The second process of the present example employ a mode in which the second circulator 8 is not operated in the second process, which mode is, however, not considered restrictive. Therefore, either the above mode or another mode in which the second circulator 8 is operated to circulate the secondary cooling medium through the second circulation passage 30A may be employed. On the other hand, if the cooling water temperature is equal to or less than the set temperature T5 (that is, if the decision result of step S7 is "YES"), then the procedure flow moves to the first process (the latter half process for inhibition of freezing of the cooling water by the heater 200) because the possibility of freezing of the cooling water is high.
Next, a description will be given regarding the operating flow of the cooling water anti-freezing operation by the heater 200.

If the cooling water temperature read in at step S7 is equal to or less than the set temperature T5, then the second circulator 8 and the heater 200 are operated (turned on) (step S8).

As has been described above, at step S8 the heater 200, the first circulator 6 and the second circulator 8 are all operated (turned on), and the first switch 11 is switched so that the destination into which the secondary cooling medium flows is directed towards the bypass passage 10. Thus, the heat from the heater 200 is supplied to the secondary cooling medium in the second circulation passage 30A not passing through the heat storage unit 5, whereby the heat of the secondary cooling medium is promptly supplied via the first heat exchanger 4 to the cooling water in the first circulation passage 2. Therefore, it becomes possible to efficiently inhibit freezing of the cooling water.

In such a cooling water anti-freezing operation, in the first heat exchanger 4, the cooling water corresponds to a heat receiving fluid while the secondary cooling medium corresponds to a heat applying fluid.

Next, the cooling water temperature detected by the first temperature detector 7 is read in (step S9). And it is decided whether or not the cooling water temperature detected is equal to or greater than the set temperature T7 (step S10).

The set temperature T7 serves as a reference temperature for bringing the first process to a stop and is set at higher temperatures than the set temperature T3. The reason for this is to inhibit the second process and the first process from resuming immediately after the first process is brought to a stop, because the temperature around the fuel cell system is assumed to be rather low due to the performing of the first process. If the cooling water temperature is less than the set temperature T7 (that is, if the decision result of step S10 is "NO"), then the procedure flow returns to step S9, and the operations subsequent to step S9 will be repeated. On the other hand, if the cooling water temperature is equal to or greater than the set temperature T7 (that is, if the decision result of step S10 is "YES"), then the heater 200 is stopped (turned off) and the first circulator 6 and the second circulator 8 are stopped (turned off) (step S18). This brings the cooling water anti-freezing operation to an end (END).

As described above, the fuel cell system of the present modified example performs, prior to the first process for inhibition of the cooling water from freezing, the second process in which the heater 200 is not operated and the first circulator 6 is operated.

Thus, the fall in temperature of the cooling water is inhibited while the residual heat in the fuel cell and the first circulation passage is utilized by the second process, and consequently the performing of the second process whose consumption energy is large because of the operation of the heater is inhibited. To sum up, when compared to the fuel cell system of Embodiment 1, the consumption energy used in the cooling water anti-freezing operation in the fuel cell system of the present modified example is held low.

### Embodiment 2

In the fuel cell system 100 of Embodiment 1, the operation of inhibiting freezing of the cooling water flowing through the fuel cell 1 has been described. However, the primary cooling medium for recovery of the exhaust heat of the fuel cell system is not limited thereto. Therefore, in Embodiment 2 there will be given a description regarding an operation of inhibiting freezing of a primary cooling medium other than the cooling water flowing through the fuel cell 1.

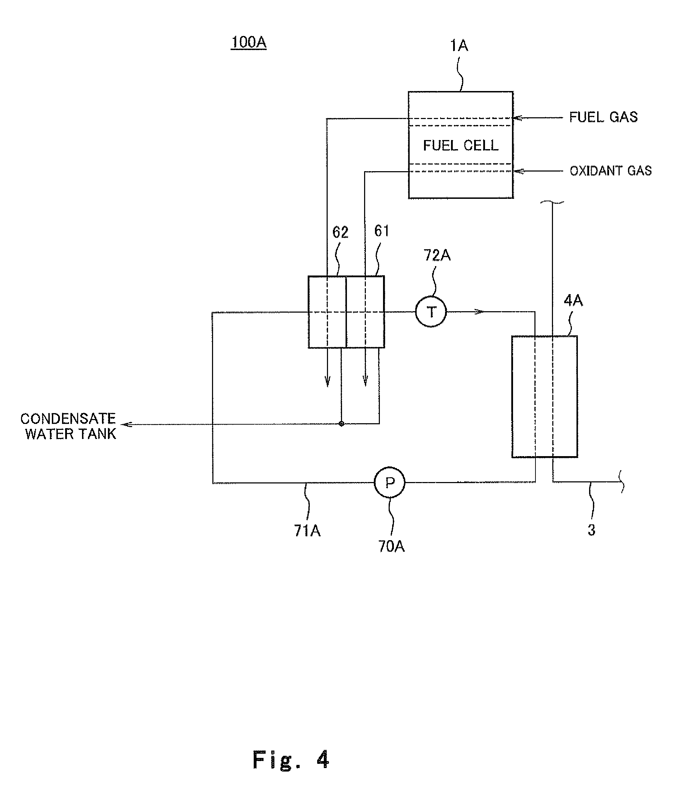

Figure 4 is a block diagram showing an example of the arrangement of a fuel cell system according to Embodiment 2 of the invention.

The heat storage configuration on the side of the common passage 3 in a first heat exchanger 4A in Figure 4 is the same as the heat storage configuration on the side of the common passage 3 in the first heat exchanger 4 (Figure 1) in Embodiment 1. Therefore, diagrammatical representation and description of the configuration common to the both of the embodiments is omitted.

As shown in Figure 4, a fuel cell system 100A includes a fuel cell 1A configured to generate electric power and heat by use of fuel gas (for example, hydrogen gas) and oxidant gas (for example, air).

In the fuel cell 1A, fuel gas supplied to an anode of the fuel cell 1A and oxidant gas supplied to a cathode of the fuel cell 1A react electrochemically to generate electric power and heat (exothermic reaction). Therefore, off fuel gas and off oxidant gas discharged outside the fuel cell 1A are in a high temperature state by exhaust gas from the fuel cell 1A.

In addition, as shown in Figure 4, the fuel cell system 100A includes a condenser 61 configured to condense water vapor contained in the off oxidant gas discharged outside the fuel cell 1A and a condenser 62 configured to condense water vapor contained in the off fuel gas discharged outside the fuel cell 1A.

And the primary cooling medium in a first circulation passage 71A is circulated by a first circulator 70A so as to pass through the condensers 61 and 62 and the first heat exchanger 4A. At this time, the temperature of the primary cooling medium flowing through the first circulation passage 71A is detected by a first temperature detector 72A. In the present embodiment, the first temperature detector 72A is disposed, between the condensers 61 and 62 and the first heat exchanger 4A, in the first circulation passage 71A. However, the first temperature detector 72A may be disposed anywhere as long as it is disposed in the first circulation passage 71A.
The first circulator 70A is a device configured to cause the cooling water to circulate through the first circulation passage 71 A. For example, a pump can be used as the first circulator 70A. However, any device can be used as the first circulator 70A as long as it is capable of circulation of the cooling water through the first circulation passage 71 A. As the first temperature detector 72A, for example, a thermistor or a thermo couple may be used. However, the first temperature detector 72A may be other type of temperature detector.
In the condenser 61, the primary cooling medium is heated by heat exchange between the primary cooling medium flowing through the first circulation passage 71 A and the off oxidant gas discharged outside the fuel cell 1A and the off oxidant gas is cooled. That is, the off oxidant gas gives its own heat to the primary cooling medium, cools itself down and is discharged out from the condenser 61. This condenses water vapor present in the off oxidant gas. The resulting condensed water is fed to a tank for recovered water (not shown). In the first heat exchanger 4A, there takes place heat exchange between the primary cooling medium which has recovered heat from the off oxidant gas and the secondary cooling medium flowing through the common passage 3.

In the condenser 62, the primary cooling medium is heated by heat exchange between the primary cooling medium flowing through the first circulation passage 71 A and the off fuel gas discharged outside the fuel cell 1A, and the off fuel gas is cooled, That is, the off fuel gas gives its own heat to the primary cooling medium, cools itself down and is discharged out from the condenser 62. This condenses water vapor present in the off fuel gas. The resulting condensed water is fed to the tank for recovered water. In the first heat exchanger 4A there takes place heat exchange between the primary cooling medium which has recovered heat from the off fuel gas and the secondary cooling medium flowing through the common passage 3.
In the fuel cell system 100A of the present embodiment, the description has been given regarding an example in which both the condensers 61 and 62 are disposed. However, there is no need to provide both the condensers 61 and 62. There may be employed an embodiment in which either one of the condensers 61 and 62 is disposed.
The fuel cell system 100A of the present embodiment described as above is configured so as to perform the first process in which for inhibiting freezing of the primary cooling medium, the heater 200 is operated and the first circulator 70A and the second circulator 8 are operated, as in the fuel cell system of Embodiment 1. In addition, like the fuel cell system 100 of Embodiment 1, it is configured in such a way that in the first process, the secondary cooling medium circulates through the second circulation passage 30A without pass through the heat storage unit 5 and exchanges heat with the primary cooling medium in the heat exchanger 4A. Thus, with regard to the primary cooling medium for cooling the exhaust gas discharged in the fuel cell system 100A, the efficiency at which the heat of the heater 200 is transferred to the primary cooling medium is further improved as compared to conventional fuel cell systems in the operation of inhibiting freezing of the primary cooling medium by use of the heat of the heater 200, as in Embodiment 1.

In addition, in the operation of inhibiting freezing of the primary cooling medium there may also be employed an embodiment in which prior to the first process, the second process is performed so that the heater 200 is not operated and the first circulator 70A is operated, as in the modified example of Embodiment 1. This makes it possible to reduce the energy to be consumed during the operation of inhibiting freezing of the primary cooling medium, as in the above modified example.

Based on the temperature detected by the first temperature detector 72A, the concrete operation of inhibiting freezing of the primary cooling medium (the first process or the second process) is performed in the same way as in the fuel cell system of Embodiment 1, and therefore its description is omitted.

In addition, as in the fuel cell system 100 of Embodiment 1, either a mode in which the second circulator 8 is not operated or another mode in which the second circulator 8 is operated to circulate the secondary cooling medium through the second circulation passage 30A may be employed for the second process.

### Modified Example of Embodiment 2

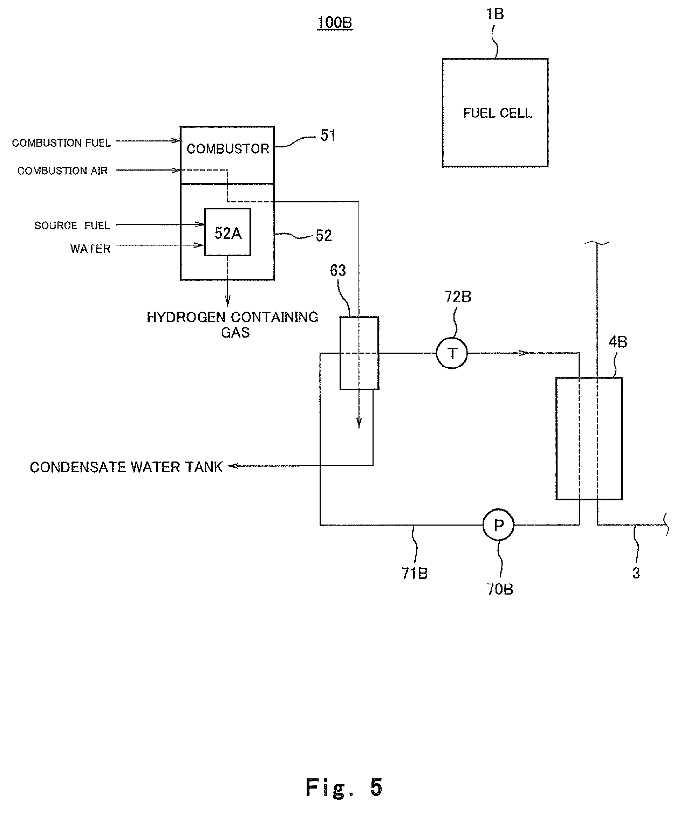

Figure 5 is a block diagram showing an example of the arrangement of a fuel cell system according to a modified example of Embodiment 2 of the invention.
As shown in Figure 5, a fuel cell system 100B includes a hydrogen generator 52 configured to generate, as a fuel gas which is supplied to an anode of a fuel cell 1B, a hydrogen containing gas by steam reforming reaction using source fuel and water vapor and a combustor 51 configured to heat the hydrogen generator 52.

When a source fuel and water are supplied to hydrogen generator 52, hydrogen generator 52 includes a reformer 52A filled with a reforming catalyst (not shown) for a reforming reaction progress by use of the source fuel and water. In the present example, there is shown a configuration in which only the reformer 52A is provided in the hydrogen generator 52. However, another configuration may be employed in which configuration the hydrogen generator 52 includes, in order to reduce carbon monoxide present in the hydrogen containing fuel gas, at least either one of a shifter configured to reduce carbon monoxide by shift reaction or a carbon monoxide remover configured to reduce carbon monoxide by oxidation reaction or methanation reaction.

The combustor 51 is supplied with a fuel for combustion (referred hereinafter to as the "combustion fuel") and air for combustion (referred hereinafter to as the "combustion air"), whereby it becomes possible to generate a high-temperature combustion exhaust gas in the combustor 51. The combustion exhaust gas heats the reformer 52A, whereby the reforming catalyst is heated up to temperatures suitable for the reforming reaction (for example, 600° C to 700° C).

In addition, as shown in Figure 5, the fuel cell system 100B of the present embodiment includes a condenser 63 configured to condense water vapor contained in the combustion exhaust gas of the combustor 51. And the primary cooling medium in a first circulation passage 71B is circulated, by the operation of the first circulator 70B, so as to pass through the condenser 63 and a first heat exchanger 4B. In addition, the first circulation passage 71B is provided with a first temperature detector 72B configured to detect the temperature of the primary cooling medium. The first temperature detector 72B is disposed in the first circulation passage 71 B between the condenser 63 and the first heat exchanger 4B. However, the first temperature detector 72B may be disposed anywhere as long as it is disposed along the first circulation passage 71 B.

The first circulator 70B is a device configured to cause the primary cooling medium to circulate through the first circulation passage 71 B. For example, a pump can be used as the first circulator 70B. However, any device can be used as the first circulator 70B as long as it can circulate the primary cooling medium through the first circulation passage 71B. As the first temperature detector 72B, for example, a thermistor or a thermo couple may be used. However, the first temperature detector 72B may be other type of temperature detector.

In the condenser 63, the primary cooling medium is heated by heat exchange between the primary cooling medium flowing through the first circulation passage 71B and the combustion exhaust gas of the combustor 51, and the combustion exhaust gas is cooled. That is, the combustion fuel gas gives its own heat to the primary cooling medium, cools itself down and is discharged out from the condenser 63. This condenses the water vapor present in the combustion fuel gas. The resulting condensed water is fed to the tank for recovered water (not shown). In the first heat exchanger 4B, heat exchange takes place between the primary cooling medium flowing through the first circulation passage 71B and the secondary cooling medium flowing through the common passage 3.

The above fuel cell system 100B of the present embodiment is configured so as to perform the first process in which for inhibiting freezing of the primary cooling medium, the heater 200 is operated and the first circulator 70B and the second circulator 8 are operated, as in the fuel cell system 100 of Embodiment 1. In addition, like the fuel cell system 100 of Embodiment 1, it is configured in such a way that in the first process, the secondary cooling medium circulates through the second circulation passage 30A without passing through the heat storage unit 5 and exchanges heat with the primary cooling medium in the heat exchanger 4B. Thus, with regard to the primary cooling medium for cooling the exhaust gas discharged in the fuel cell system 100B, the efficiency at which the heat of the heater 200 is transferred to the primary cooling medium is further improved as compared to conventional fuel cell systems in the operation of inhibiting freezing of the primary cooling medium by use of the heat of the heater 200, as in Embodiment 1.

In addition, in the operation of inhibiting freezing of the primary cooling medium there may also be employed an embodiment in which prior to the first process, the second process is performed so that the heater 200 is not operated and the first circulator 70B is operated, as in the modified example of Embodiment 1. This makes it possible to reduce the energy to be consumed during the operation of inhibiting freezing of the primary cooling medium, as in the above modified example.

Based on the temperature detected by the first temperature detector 72B, the concrete operation of inhibiting freezing of the primary cooling medium (the first process or the second process) is performed in the same way as in the fuel cell system of Embodiment 1, and therefore its description is omitted.

In addition, as in the fuel cell system 100 of Embodiment 1, either a mode in which the second circulator 8 is not operated or another mode in which the second circulator 8 is operated to circulate the secondary cooling medium through the second circulation passage 30A may be employed for the second process.

### Modified Example 1 of Embodiments 1 and 2

In Embodiments 1 and 2 and their modified examples, the heater 200 including the combustor 14 capable of generating a high-temperature combustion exhaust gas produced by fuel combustion is shown by way of example. However, the heater 200 configured to heat the secondary cooling medium in the second circulation passage 30A is not limited to such a configuration including the combustor 14. For example, there is an additional modified example thereof in which the heater may include, as a substitute for the combustor 14, a heat pump using atmospheric heat.

### Modified Example 2 of Embodiments 1 and 2

In Embodiments 1 and 2 and their modified examples, the amount of heat application of the heater 200 is not specified. However, in the light of making efficient use of energy, it can be considered more favorable, as their additional modified example, to periodically increase the amount of heat application of the heater 200 configured to heat the secondary cooling medium in the second circulation passage 30A. For example, the amount of heat application of the heater 200 is controlled so as to repeatedly increase and decrease at constant intervals of time. More specifically, the controller 40 is configured to control so that the amount of heat application of the heater 200 varies periodically and at constant intervals of time between a first amount of heat application and a second amount of heat application greater than the first amount of heat application.

In addition, a mode for "periodically increasing and decreasing the amount of heat application of the heater 200" is not limited to the above mode. For example, there may be employed a mode in which the heat application amount is repeatedly increased and decreased based on the temperature of the secondary cooling medium. For example, the controller 40 is configured such that it provides control so that for inhibiting excessive rise in temperature of the secondary cooling medium due to the heating operation of the heater 200, the amount of heat application of the heater 200 is reduced with the rise in temperature of the secondary cooling medium while for inhibiting freezing of the cooling water, the amount of heat application of the heater 200 is increased with the fall in temperature of the secondary cooling medium. Further, more specifically, it is controlled such that when the temperature detected by the second temperature detector 9 is equal to or greater than a first threshold, the amount of heat application of the heater 200 serves as a first heat application amount while, when the temperature detected by the second temperature detector 9 is equal to or less than a second threshold lower than the first threshold, the amount of heat application of the heater 200 serves as a second heat application amount greater than the first heat application amount.

By such a configuration, the amount of heat application of the heater 200 can be increased and decreased at intervals according to need, thereby making it possible to perform the operation of inhibiting freezing of the cooling water while inhibiting excessive rise in temperature of the secondary cooling medium to be heated by the heater 200.

### Industrial Applicability

According to the invention, the efficiency at which the heat of the heater configured to heat the secondary cooling medium is transferred to the primary cooling medium is further improved as compared to conventional fuel cell systems in the operation of inhibiting freezing of the primary cooling medium used for recovery of the exhaust heat of the fuel cell system. Therefore, the invention can be utilized as home and commercial fuel cell systems or other like system.

### Reference Sings List

- 1, 1A, 1B:: fuel cell
- 2, 71A, 71B:: first circulation passage
- 3:: common passage
- 4, 4A, 4B:: first heat exchanger
- 5:: heat storage unit
- 6, 70A, 70B:: first circulator
- 7, 72A, 72B:: first temperature detector
- 8:: second circulator
- 9:: second temperature detector
- 10:: bypass passage
- 11:: first switch
- 12:: second heat exchanger
- 13:: second switch
- 14, 51:: combustor
- 15:: heat storage side passage
- 16:: third circulator
- 17:: heat load passage
- 20:: heat load
- 30A:: second circulation passage
- 30B:: third circulation passage
- 30C:: fourth circulation passage
- 40:: controller
- 52:: hydrogen generator
- 52A:: reformer
- 61, 62, 63:: condenser
- 100, 100A, 100B:: fuel cell system
- 200:: heater

## Claims

1. A fuel cell system comprising:
a fuel cell;
a first circulation passage through which circulates a primary cooling medium to recover exhaust heat produced in the fuel cell system including the fuel cell;
a heat storage unit configured to store a secondary cooling medium which has recovered heat from the primary cooling medium;
a heat exchanger where heat exchange takes place between the primary cooling medium and the secondary cooling medium;
a second circulation passage, not passing through the heat storage unit, through which circulates the secondary cooling medium to exchange heat with the primary cooling medium in the heat exchanger;
a first circulator configured to cause the primary cooling medium to circulate through the first circulation passage;
a second circulator configured to cause the secondary cooling medium to circulate through the second circulation passage;
a heater configured to heat the secondary cooling medium in the second circulation passage; and
a controller configured to perform, for inhibiting freezing of the primary cooling medium, a first process so that the heater is operated and the first and second circulators are operated.

2. The fuel cell system according to claim 1, further comprising:
a third circulation passage, passing through the heat storage unit, through which circulates the secondary cooling medium to exchange heat with the primary cooling medium in the heat exchanger; and
a bypass passage configured to provide connection between the third circulation passage upstream of the heat exchanger and the third circulation passage downstream of the heat exchanger, wherein:
the second circulation passage comprises:
the third circulation passage which extends from one point of the connection, located upstream of the heat exchanger, with the bypass passage, passes through the heat exchanger and reaches to the other point of the connection, located downstream of the heat exchanger, with the bypass passage; and
the bypass passage.

3. The fuel cell system according to claim 2, further comprising:
a switch configured to switch the destination, into which the secondary cooling medium after passage through the heat exchanger is directed to flow, between the heat storage unit and the bypass passage, wherein:
the controller is configured to control the switch so that in the first process, the inflow destination is selectively directed towards the bypass passage.

4. The fuel cell system according to claim 1, wherein:
prior to the first process, the controller is configured to perform a second process so that with the heater placed out of operation, the first circulator is operated.

5. The fuel cell system according to claim 1, wherein:
the controller is configured to control the heater so that the amount of heat application of the heater is increased and decreased at intervals during the first process.

6. A method for operating a fuel cell system, the fuel cell system comprising:
a fuel cell;
a first circulation passage through which circulates a primary cooling medium to recover exhaust heat produced in the fuel cell system including the fuel cell;
a heat storage unit configured to store a secondary cooling medium which has recovered heat from the primary cooling medium;
a heat exchanger where heat exchange takes place between the primary cooling medium and the secondary cooling medium;
a second circulation passage, not passing through the heat storage unit, through which circulates the secondary cooling medium to exchange heat with the primary cooling medium in the heat exchanger;
a first circulator configured to cause the primary cooling medium to circulate through the first circulation passage;
a second circulator configured to cause the secondary cooling medium to circulate through the second circulation passage; and
a heater configured to heat the secondary cooling medium in the second circulation passage,
for inhibiting freezing of the primary cooling medium, the method comprising the steps of:
(a) the step in which the heater is operated and the secondary cooling medium is circulated through the second circulation passage; and
(b) the step in which the heat held in the secondary cooling medium heated in the step (a) is transferred via the heat exchanger to the primary cooling medium circulating through the first circulation passage.
